# EUROPÄISCHE PATENTSCHRIFT

(11) **EP 2 519 363 B1**
(45) Veröffentlichungstag und Bekanntmachung des Hinweises auf die Patenterteilung: **18.09.2013**
(21) Anmeldenummer: 10795658.3
(22) Anmeldetag: 14.12.2010
(51) Int. Cl.: B21B 1/46, B21B 39/18, B22D 11/14, B65G 47/50

(54) **TRANSPORTVORRICHTUNG FÜR BRAMMEN MIT MINDESTENS ZWEI LINEARN UNABHÄNGIG VONEINANDER VERSCHWENKBAREN FÖRDERABSCHNITTEN**
TRANSPORT DEVICE FOR SLABS WITH AT LEAST TWO LINEAR, INDEPENDENTLY FROM EACH OTHER PIVOTABLE ADVANCING SECTIONS
DISPOSITIF DE TRANSPORT POUR BRAMES AVEC AU MOINS DEUX SECTIONS DE TRANSFERT LINEAIRES ET PIVOTABLES DE MANIERE INDEPENDANTE L'UN VIS A VIS DE L'AUTRE

(30) Priorität: 29.12.2009 DE 102009060824
(43) Veröffentlichungstag der Anmeldung: 07.11.2012
(73) Patentinhaber: SMS Siemag AG, 40237 Düsseldorf (DE)
(72) Erfinder: NEUMANN, Luc, 40223 Düsseldorf (DE); KAUPPER, Kilian, 45657 Recklinghausen (DE); BILGEN, Christian, 40477 Düsseldorf (DE); MEYER, Alexander, 40477 Düsseldorf (DE); BÖCHER, Tilmann, 40489 Düsseldorf (DE); GATHMANN, Marcel, 40223 Düsseldorf (DE)
(74) Vertreter: Klüppel, Walter
(86) Internationale Anmeldenummer: PCT/EP2010/069581
(87) Internationale Veröffentlichungsnummer: WO 2011/080064

(56) Entgegenhaltungen:
- EP-A2- 0 908 244
- WO-A1-00/12235
- DD-A1- 129 172
- GB-A- 1 122 815
- US-A- 5 970 594
- US-A- 6 018 855

## Beschreibung

Die Erfindung betrifft eine Transportvorrichtung für Brammen gemäß dem Oberbegriff des Anspruchs 1 (siehe, z.B., US 6 018 855).

Transportvorrichtungen, mit denen Brammen von mindestens zwei Gießmaschinen zu einem Walzwerk transportiert werden können, sind im Stand der Technik hinlänglich bekannt. Verschiedene Ausgestaltungen solcher Vorrichtungen sind in der US 6 018 855 A, in der US 5 970 594 A, in der EP 0 492 226 B1, in der WO 00/12235, in der EP 0 593 002 B1, in der EP 0 867 239 B1**,** in der EP 1 127 628 A1, in der DE 195 24 082 B4, in der DE 41 37 547 C2, in der EP 0 682 770 B1, in der EP 0 845 308 B1, in der DD 129 172 A1 und in der GB 1 122 815 A beschrieben. Dabei haben sich zwei unterschiedliche Ausführungen bewährt:
1. Parallelfähre, bei der ein beweglicher Förderabschnitt parallel von einem Gießstrang zum nächsten bewegt wird.
2. Schwenkfähre, bei der zwei bewegliche Förderabschnitte unterschiedlicher Gießstränge aufeinander zuschwenken und die Bramme unter einem Winkel zur Haupttransportrichtung bewegt wird.

Die vorliegende Ausarbeitung befasst sich mit der zweiten Ausführung, der Schwenkfähre. Hierfür können schwenkbare Förderabschnitte eingesetzt werden. Eine solche Lösung, die der eingangs genannten Art entspricht, ist in der EP 0 908 243 B1 und in der EP 0 908 244 B1 beschrieben. Hier kommt ein in der Draufsicht V-förmiges Weichenelement zum Einsatz, das an einen linearen Transportabschnitt angrenzt. Durch Verschwenken dieses V-förmigen Weichenelements um eine Vertikalachse kann die Bramme in eine gewünschte Richtung umgelenkt bzw. transportiert werden.

Vorteilhaft ist bei einer solchen Lösung, dass eine sehr flexible Förderung der Brammen bewerkstelligt werden kann.

Als nachteilig hat sich bei dieser Lösung allerdings folgendes ergeben: Die Möglichkeit zur präzisen Brammenführung nimmt am Einlauf der Bramme in das V-förmige Weichenelement stark ab. Dies ist dadurch bedingt, dass sich die Breite des Weichenelements an der Stelle der Gabelung des Weichenelements zwangsläufig zunehmen muss. Demgemäß nimmt auch die Möglichkeit ab, die Bramme seitlich zu führen.

Aus der Verbreiterung der Führung der Bramme im Bereich des Einlaufs in das V-förmige Weichenelement ergibt sich weiterhin nachteilig, dass hier sehr breite Rollen benötigt werden. Die Durchbiegung derselben nimmt mit zunehmender Breite zu, was sich gleichfalls negativ auf die Führungsgenauigkeit auswirkt. Es spricht für sich, dass eine Lösung wie in EP 0 908 243 B1 beschrieben, niemals technisch realisiert wurde.

Der vorliegenden Erfindung liegt daher die Aufgabe zugrunde, eine Transportvorrichtung der eingangs genannten Art so fortzubilden, dass bei Nutzung der gattungsgemäßen Transportvorrichtung und der Nutzung der Flexibilität derselben die genannten Nachteile vermieden werden sollen. Demgemäß wird angestrebt, dass eine verbesserte Führung der Brammen bei deren Transport von einer Gießmaschine zu einem Walzwerk ermöglicht wird.

Die Lösung dieser Aufgabe durch die Erfindung ist dadurch gekennzeichnet, dass die mindestens zwei linearen, verschwenkbaren Förderabschnitte unabhängig voneinander um eine vertikale Achse verschwenkbar angeordnet sind, wobei die mindestens zwei linearen, verschwenkbaren Förderabschnitte um einen Schwenkpunkt verschwenkbar angeordnet sind, der außerhalb der Längserstreckung der Förderabschnitte angeordnet ist, siehe Anspruch 1.

Die linearen und ortsfesten Förderabschnitte sind dabei bevorzugt parallel zueinander angeordnet.

Die linearen Förderabschnitte sind mit Vorteil als Rollgangelemente ausgebildet.

Zumindest ein Teil der linearen Förderabschnitte kann mit Ofenelementen, insbesondere in Form von Tunnelöfen, versehen sein. Dabei ist bevorzugt vorgesehen, dass zumindest ein Teil der Ofenelemente der linearen Förderabschnitte jeweils unabhängig voneinander beheizbar sind.

Zumindest ein Teil der linearen Förderabschnitte kann weiterhin mit thermischen Isolierelementen versehen sein. Die thermischen Isolierelemente können im endseitigen Bereich wärmedämmend verschließbar sein.

Zumindest ein Teil der linearen Förderabschnitte kann weiterhin mit Entzunderungselementen versehen sein. Möglich sind auch weitere spezielle Brammenbehandlungseinrichtungen.

Weiterhin kann mindestens ein linearer und ortsfester Förderabschnitt vorhanden sein, der im Anschluss an einen linearen, verschwenkbaren Förderabschnitt angrenzt und unter einem vorzugsweise spitzen Winkel zur Förderrichtung angeordnet ist.

Durch das erfindungsgemäße zweiteilige Weichenelement und die separate Verschwenkmöglichkeit der beiden Teile wird die obige Aufgabe vollumfänglich gelöst.

Mit der vorgeschlagenen Ausgestaltung der Transportvorrichtung ist es möglich, die Bramme auch an der Gabelung bzw. zur (Haupt-)Förderrichtung winkeligen Umleitung präzise zu führen. D. h. die Brammenführung ist auch im Bereich der Weiche verbessert, da im Einlaufbereich der Bramme in den schwenkbaren Förderabschnitt die Rollen des Förderabschnitts die Richtung des Transports präzise vorgerben. Im Gegensatz zur oben diskutierten vorbekannten Lösung wird also eine gewisse Undefiniertheit der Laufrichtung der Bramme beim Einlauf in das Weichenelement vermieden.

Es können auch im gesamten Bereich der Transportvorrichtung gleich lange Förderrollen eingesetzt werden, d. h. es werden keine Rollen mit erhöhter Breite im Einlauf des Weichenelements benötigt. Dies verbessert ebenfalls die Führungsgenauigkeit, da die Durchbiegungen der Rollen geringer gehalten werden können.

Es ergeben sich auch energetische Vorteile: Bei bestimmten Stahlsorten (z. B. bei Siliziumstählen) kann es nötig sein, höhere Temperaturen zu fahren. Dann kann die Temperatur vorbestimmter Öfen erhöht werden, mit denen die betreffenden Förderabschnitte versehen sind. Diese Temperaturerhöhung kann dabei nur für einen Teil der schwenkbaren Förderabschnitte vorgesehen werden. Die Förderabschnitte, die nicht Brammen der betreffenden Stahlsorte fördern, können auf der standardgemäßen Temperatur gehalten werden.

Problemlos möglich ist auch das zeitweise Stillsetzen eines Teils der Förderabschnitte, z. B. zu Wartungszwecken. Die Transportvorrichtung kann dennoch weiter Brammen in gewissem Umfang fördern. Hieraus ergibt sich auch eine einfachere Möglichkeit, Förderrollen auszutauschen.

Die Erfindung kann an allen Gießwalzanlagen eingesetzt werden, die mit mehr als einer Gießmaschine versehen sind. Generell kann der Transport von einem Strang auf einen anderen erfolgen.

Die Kapazität der Gesamtanlage und die Pufferzeiten von Tunnelöfen können erfindungsgemäß erhöht werden. Die vorteilhafte Flexibilität ergibt sich bereits bei zwei Strängen, kommt aber bevorzugt bei drei Strängen zur Wirkung.

Es können auf der vorgeschlagenen Transportvorrichtung zeitparallel mehrere Brammen im Fährenbereich gefördert werden. Damit wird insbesondere bei Hochproduktionsanlagen (Jahrestonnage von mehr als drei Mio. Tonnen) der Engpass vermieden, der sich oft durch die Fähre ergibt. Es können vielmehr gleichzeitig Brammen von einem Nebenstrang in die Fähre und auf den Hauptstrang gefördert werden.

Bei gleicher Baulänge der Anlage wie in einer Parallelfährenanlage ist vorteilhaft die Pufferkapazität der Öfen mit der vorgeschlagenen Konzeption höher.

In der Zeichnung sind Ausführungsbeispiele der Erfindung dargestellt. Es zeigen:
- Fig. 1: schematisch in der Draufsicht eine Transportvorrichtung, mit der Brammen von drei Gießmaschinen zu einem Walzwerk gefördert werden können, wobei beim Transport der Brammen diese zumindest teilweise eine Richtungsumkehr nehmen,
- Fig. 2: die Darstellung gemäß Fig. 1 zu einem etwas späteren Zeitpunkt,
- Fig. 3: schematisch in der Draufsicht eine Transportvorrichtung in einer zu Fig. 1 modifizierten Ausführungsform, wobei beim Transport der Brammen eine Richtungsumkehr entbehrlich ist,
- Fig. 4: die Darstellung gemäß Fig. 3 zu einem etwas späteren Zeitpunkt,
- Fig. 5: schematisch in der Draufsicht eine Transportvorrichtung in einer weiteren zu Fig. 1 modifizierten Ausführungsform,
- Fig. 6: die Darstellung gemäß Fig. 5 zu einem etwas späteren Zeitpunkt,
- Fig. 7: schematisch in der Draufsicht eine Transportvorrichtung in einer weiteren zu Fig. 3 modifizierten Ausführungsform,
- Fig. 8: die Darstellung gemäß Fig. 7 zu einem etwas späteren Zeitpunkt,
- Fig. 9: die geschnittene Seitenansicht eines Teils der Transportvorrichtung,
- Fig. 10: die geschnittene Seitenansicht eines Teils der Transportvorrichtung gemäß einer zu Fig. 9 alternativen Ausführungsform,
- Fig. 11: die geschnittene Seitenansicht eines Teils der Transportvorrichtung gemäß einer weiteren zu Fig. 9 alternativen Ausführungsform und
- Fig. 12: die Draufsicht auf den in Fig. 11 dargestellten Teil der Transportvorrichtung.

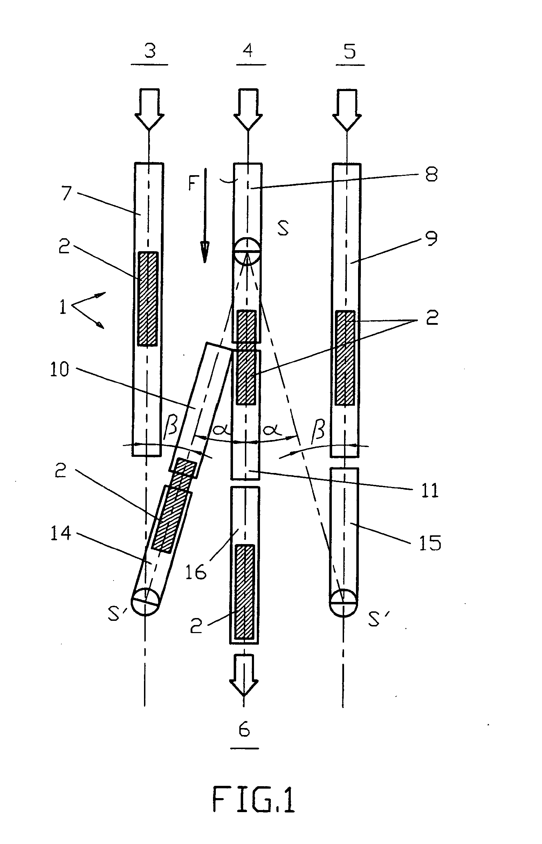

In Fig. 1 ist eine Transportvorrichtung 1 zu sehen, mit der Brammen 2 von insgesamt drei Gießmaschinen 3, 4 und 5 zu einem Warmwalzwerk 6 gefördert werden. Dabei liegt eine (Haupt-)Förderrichtung F vor. Die vorliegende Erfindung ist natürlich genauso auch bei nur zwei oder bei mehr als drei Gießmaschinen einsetzbar. Das gilt auch für die Anzahl der Walzwerke, wenngleich im Ausführungsbeispiel nur eines vorhanden ist.

Die gegossenen Brammen 2 werden in Fig. 1 von oben (von den Gießmaschinen 3, 4, 5) nach unten (zum Walzwerk 6) gefördert. Hierfür weist die Transportvorrichtung 1 im in Fig. 1 oben dargestellten Bereich drei ortsfeste lineare Förderabschnitte 7, 8 und 9 auf, die vorliegend parallel zueinander angeordnet sind; es ist aber auch genauso möglich, dass die Förderabschnitte 7, 8, 9 nicht parallel, sondern unter einem Winkel zueinander verlaufen.

In der dargestellten Position der einzelnen dargestellten Förderabschnitte ist es möglich, dass Brammen 2 der mittleren Gießmaschine 4 linear und direkt - von dem ortsfesten Förderabschnitt 8 kommend - ohne Richtungsumkehr zum Walzwerk 6 gefördert werden.

Indes erfolgt der Brammentransport von den beiden seitlich angeordneten Förderabschnitten 7 und 9 durch zweimalige Richtungsumkehr der Brammen 2. Hierfür sind im mittleren Bereich der Transportvorrichtung 1 zwei schwenkbare Förderabschnitte 10 und 11 vorgesehen, die um einen Schwenkpunkt S verschwenkt werden können, und zwar unabhängig voneinander. Im unteren Bereich der Transportvorrichtung sind weiterhin zwei ebenfalls schwenkbar angeordnete Förderabschnitte 14 und 15 vorhanden, die um jeweilige Schwenkpunkte S' geschwenkt werden können, die in ihrem axialen Endbereich angeordnet sind.

Der Schwenkpunkt S der schwenkbaren Förderabschnitte 10 bzw. 11 liegt gemägemäß der Erfindung außerhalb der axialen Erstreckung der Abschnitte 10 bzw. 11 und bevorzugt unter einem ortsfesten Förderabschnitt.

Die von den Förderabschnitten 7 und 9 kommenden Brammen 2 werden also zunächst in Fig. 1 nach unten gefördert und dabei in die jeweiligen schwenkbaren Förderabschnitte 14 bzw. 15 eingeleitet, die hierzu in Fluch mit den Förderabschnitten 7 bzw. 9 gefahren worden sind (dargestellt für den Förderabschnitt 15 in Fig. 1). Wenn die Bramme 2 von den schwenkbaren Förderabschnitten 14 bzw. 15 aufgenommen ist, verschwenken diese um den Schwenkpunkt S' in die Position, die für den Förderabschnitt 14 in Fig. 1 dargestellt ist; der Schwenkwinkel ist für den Förderabschnitt 14 in Fig. 1 mit β eingetragen. Gleichzeitig werden die schwenkbaren Förderabschnitte 10 bzw. 11 in die Position verschwenkt, die in Fig. 1 für den Förderabschnitt 10 dargestellt ist.

Demgemäß kann nunmehr die Bramme 2 - entgegen der Förderrichtung F - von dem Förderabschnitt 14 bzw. 15 in den Förderabschnitt 10 bzw. 11 einfahren. Befindet sich die Bramme 2 vollständig auf dem Förderabschnitt 10 bzw. 11, schwenkt der Förderabschnitt 10 bzw. 11 um den eingetragenen Winkel α zurück in Flucht mit dem Förderabschnitt 8 bzw. dem in Fortsetzung des Förderabschnitts 8 unten angeordneten ortsfesten Förderabschnitt 16; diese Stellung ist für den Förderabschnitt 11 in Fig. 1 dargestellt.

Durch nochmalige Richtungsumkehr der Bramme 2 kann jetzt die Bramme vom Abschnitt 10 bzw. 11 auf den Abschnitt 16 und weiter zum Walzwerk 6 gefahren werden.

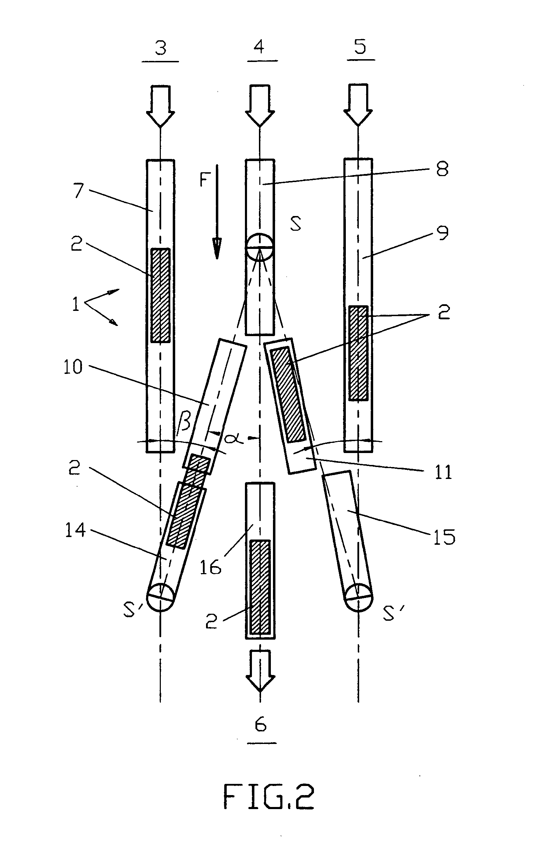

Die zeitlichte Abfolge ist für zwei nacheinander stattfindende Zeitpunkte in den Figuren 1 und 2 illustriert.

Wesentlich ist hierbei, dass die beiden linearen, verschwenkbaren Förderabschnitte 10 und 11 unabhängig voneinander verschwenkbar angeordnet sind. Damit kann insbesondere an ihrem in Fig. 1 oberen axialen Ende eine präzise Brammenführung erfolgen.

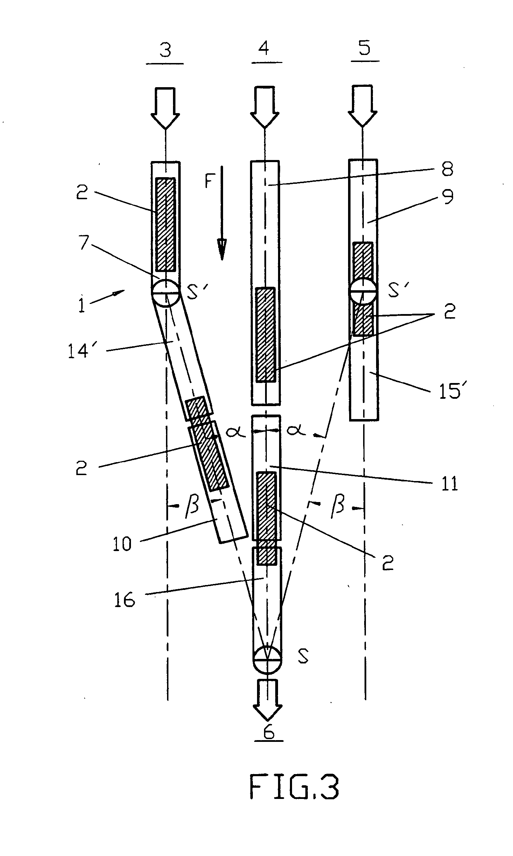

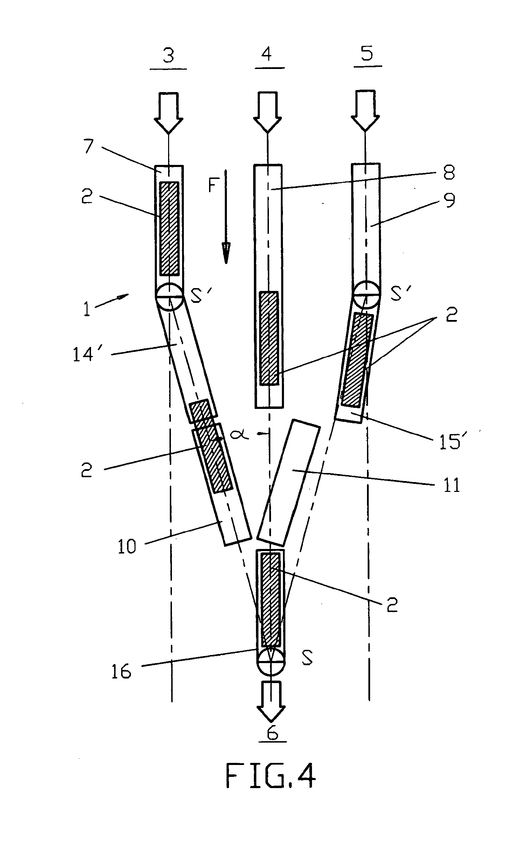

In den Figuren 3 und 4 ist dasselbe Prinzip für eine alternative Ausgestaltung der Erfindung dargestellt, ebenfalls für nacheinander stattfindende Zeitpunkte. Den schwenkbaren Förderabschnitten 14 und 15 in den Figuren 1 und 2 entsprechen hier die ebenfalls schwenkbar angeordneten Förderabschnitte 14' und 15', die um den Winkel β schwenken können. Hier kann die Brammenförderung ohne Richtungsumkehr von den Gießmaschinen 3, 4, 5 zum Walzwerk 6 erfolgen.

Wiederum ist wesentlich, dass die beiden linearen, verschwenkbaren Förderabschnitte 10 und 11 unabhängig voneinander verschwenkbar angeordnet sind.

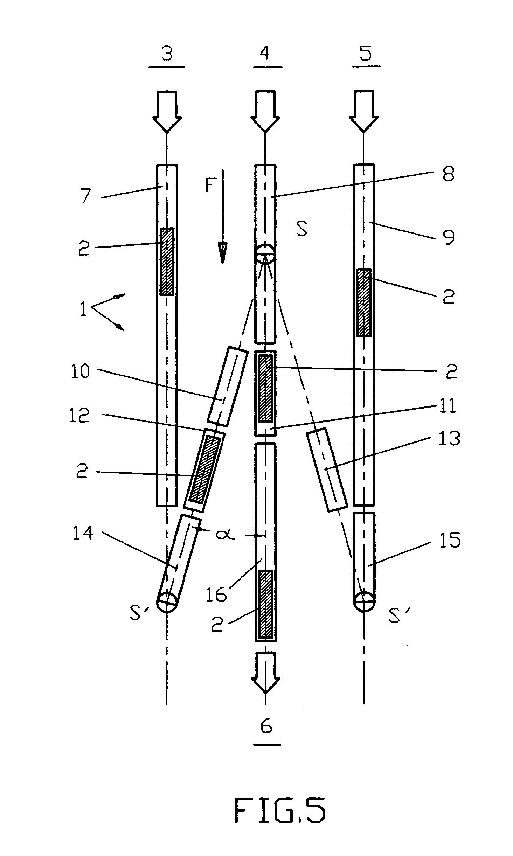

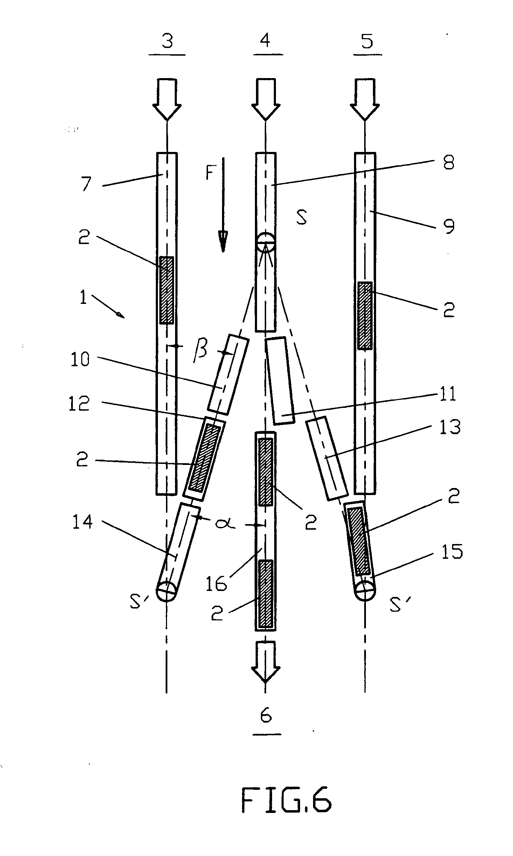

Eine weitere alternative Ausführungsform der Erfindung ist in den Figuren 5 und 6 für wiederum zwei aufeinander folgende Zeitpunkte illustriert. Diese Lösung ähnelt derjenigen gemäß Fig. 1 und 2, weil auch hier für den Transport der Brammen 2 von den seitlichen Förderabschnitten 7 und 9 eine zweimalige Richtungsumkehr nötig ist, um sie von den Gießmaschinen 3 bzw. 5 zum Walzwerk 6 zu fördern.

Die Lösung unterscheidet sich hier allerdings von derjenigen gemäß Fig. 1 und 2 dadurch, dass zwischen den schwenkbaren Förderabschnitten 10 und 11 und den schwenkbaren Förderabschnitten 14 bzw. 15 ortsfeste Förderabschnitte 12 bzw. 13 angeordnet sind. Im Falle der Brammen 2 von der Gießmaschine 3 werden diese demgemäß über die Förderabschnitte 7 - 14 - 12 - 10 - 16 zum Walzwerk 6 transportiert. Auf den Förderabschnitten 14 und 10 erfolgt die jeweilige Richtungsumkehr.

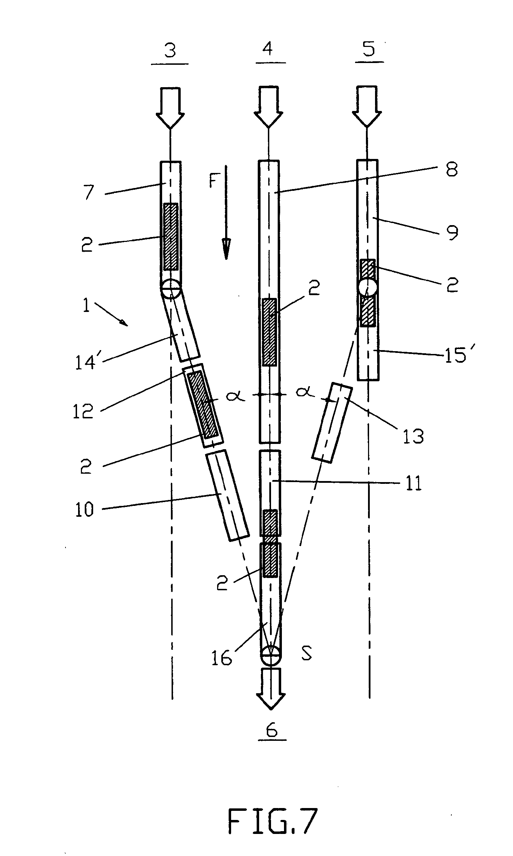

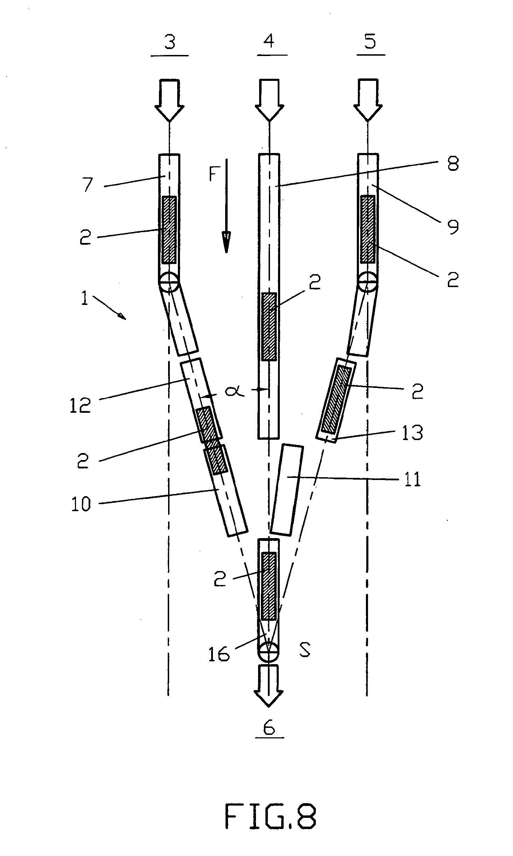

In den Figuren 7 und 8 ist eine weitere alternative Ausführungsform der Erfindung dargestellt. Diese ist an die Lösung gemäß Fig. 3 und 4 angelehnt. Allerdings ist auch hier zwischen den schwenkbaren Förderabschnitten 14' bzw. 15' und den schwenkbaren Förderabschnitten 10 bzw. 11 ein ortsfester Förderabschnitt 12 bzw. 13 angeordnet. Wiederum kann hier das Fördern der Brammen 2 ohne deren Richtungsumkehr von allen Gießmaschinen 3, 4, 5 zum Walzwerk 6 erfolgen.

Der Brammentransport kann so mit einer minimalen Anzahl Transportphasen erfolgen. Der Brammentransport kann in minimaler Zeit erfolgen. Demgemäß ist der Durchsatz der Anlage höher als bei herkömmlichen Anlagen.

Darüber hinaus ist die Flexibilität des Transportsystems hoch, insbesondere wenn Teile der Anlage nicht benötigt werden und stillgesetzt werden. Von Vorteil ist also, dass einzelne Gießmaschinen problemlos zeitweise stillgesetzt werden können. Der Brammentransport kann in effizienter und flexibler Weise fortgeführt werden.

Jeder Transportabschnitt kann separat mit einem (nicht dargestellten) Ofen beheizt werden, wobei Tunnelöfen bevorzugt sind. Ebenfalls bevorzugt sind Induktionsheizungen.

Vorgesehen kann auch werden, dass im Anschluss an einen Förderabschnitt eine Probenentnahmestation angeordnet wird, Hierzu bieten sich besonders die für die Richtungsumkehr vorgesehenen Förderabschnitte 14 und 15 an.

In allen Förderabschnitten können wahlweise auch spezielle Einrichtungen integriert werden, die der Entzunderung, der gezielten Oxidation oder der Oberflächenbehandlung der Bramme dienen.

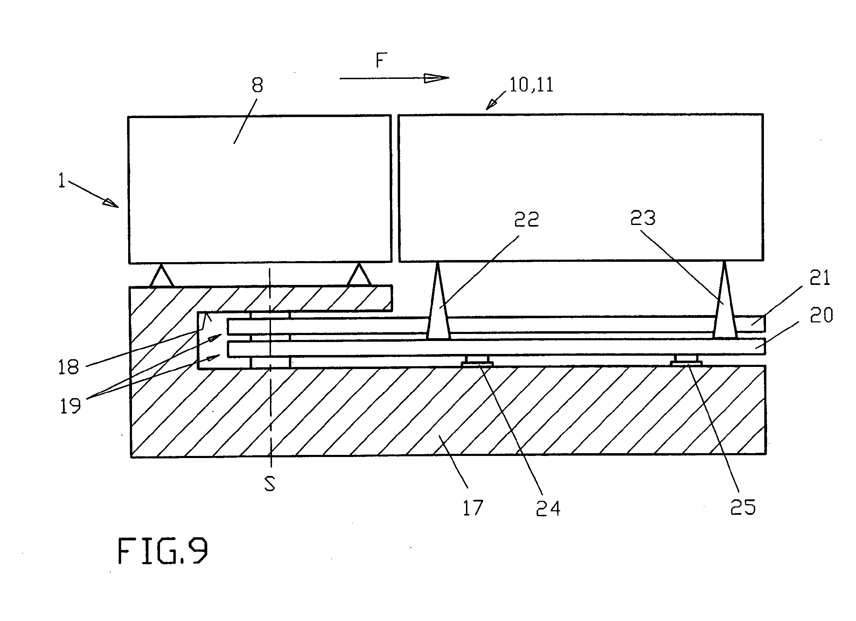

In den Figuren 9 bis 12 sind einige Details der vorrichtungstechnischen Ausgestaltung der Transportvorrichtung 1 dargestellt.

In Fig. 9 ist ein Teil der Transportvorrichtung 1 dargestellt, und zwar der ortsfeste Förderabschnitt 8 gemäß Fig. 1 bzw. Fig. 2 und die sich in Förderrichtung F anschließenden schwenkbaren Förderabschnitte 10 und 11 (die in der Darstellung gemäß Fig. 9 hintereinander liegen). Eine analoge Ausgestaltung kann auch für den ortsfesten Förderabschnitt 16 und die sich vor diesem befindlichen schwenkbaren Förderabschnitte 10 und 11 vorgesehen werden, wie es beispielsweise in Fig. 3 und Fig. 4 vorgesehen ist (wobei dann die Förderrichtung in die andere Richtung weisen würde).

Das Fundament 17 trägt zunächst den ortsfesten Förderabschnitt 8. Unter dem Förderabschnitt 8 ist im Fundament 17 eine Ausnehmung 18 angeordnet, in der die Schwenklagerung 19 für die beiden schwenkbaren Förderabschnitte 10 und 11 angeordnet ist. Die Schwenklagerung 19 ist als vertikal gelagerte Achse ausgebildet, die den Schwenkpunkt S bildet. Die Schwenklagerung 19 lagert zwei Auflagen 20 und 21 für die beiden schwenkbaren Förderabschnitte 10 und 11, d. h. jede Auflage 20, 21 trägt einen Förderabschnitt 10, 11. Für die Auflage 20 sind zwei Trägerelemente 22 und 23 angedeutet, die auf der Auflage 20 fest angeordnet sind und die den Förderabschnitt 10 tragen. Analoges gilt für die Auflage 21 (nicht im Detail dargestellt).

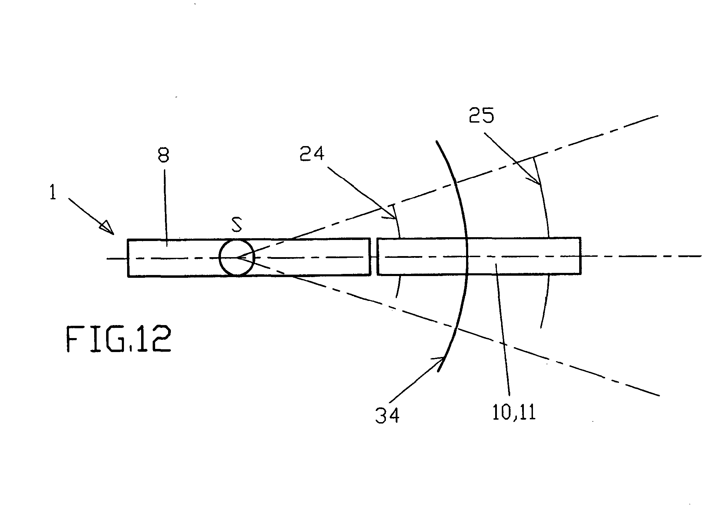

Die Auflagen 20 und 21 sind - was nur für die Auflage 20 dargestellt ist, was aber für die Auflage 21 analog gilt - auf zwei bogenförmigen Schienen 24 und 25 gelagert, die in der Draufsicht (s. hierzu Fig. 12) kreisbogenförmig um den Schwenkpunkt S verlaufen. Die Auflagen 21, 22 können gegebenenfalls über Verzahnungen mit den Schienen 24, 25 kämmen. Dann tragen die Auflagen 21, 22 um eine horizontale Achse drehbare Zahnräder, deren Achse zum Schwenkpunkt S weist; die Schienen 24, 25 sind dabei nach Art einer gebogenen Zahnstange ausgebildet. Diese Ausführungsform ermöglicht eine präzise Schwenkbewegung durch gesteuerten Drehantrieb der Zahnräder.

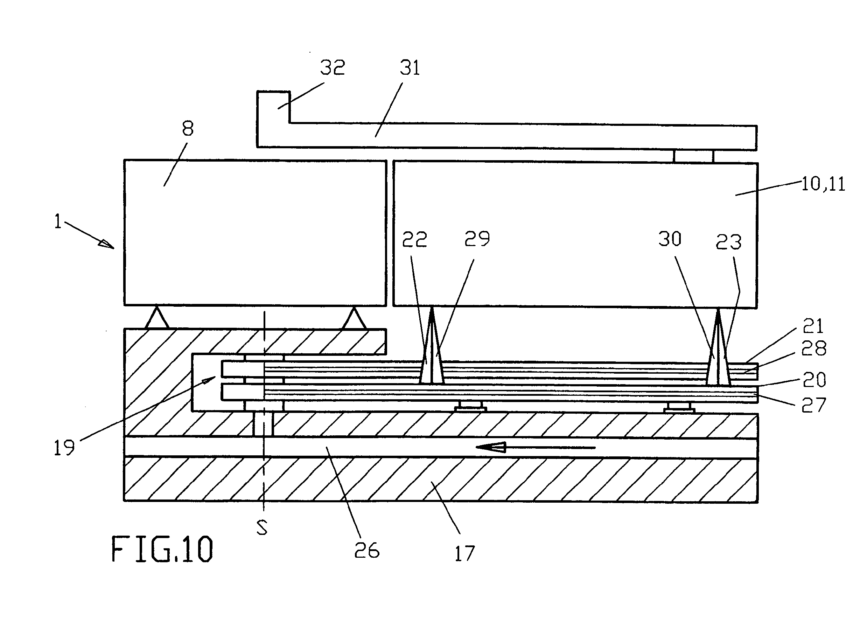

Fig. 10 spezifiziert, wie die Zu- und Abfuhr von Medien bzw. Energie erfolgen kann. Das hier dargestellte Prinzip stellt darauf ab, dass die Medienversorgung auch über den Ort des Schwenkpunkts S erfolgt. Hierzu verläuft im Fundament 17 mindestens eine Medienzufuhrleitung 26 für Brenngas, Luft, Elektrizität, Wasser oder sonstige benötigte Medien bzw. Energie. Deren Zufuhrrichtung ist durch den Pfeil in der Medienzufuhrleitung 26 angegeben. Die Medien bzw. die Energie wird im Bereich der Schwenklagerung 19 vertikal durch die Welle der Schwenklagerung nach oben geführt. In Höhe des Ansatzes der Auflagen 20, 21 führen Leitungen 27, 28 in den Auflagen 20, 21 zu den Trägerelementen 22, 23; in den Trägerelementen 22, 23 führen dann weitere Leitungen 29, 30 zum Förderabschnitt 10, 11.

In der Schwenklagerung 19 sind also entsprechende Drehdurchführungen ausgebildet, über die die Medien- und Energieversorgung erfolgt.

Die Abfuhr beispielsweise von Kühlwasser erfolgt in analoger Weise in umgekehrter Richtung.

Die Abfuhr von Abgas erfolgt indes im Ausführungsbeispiel gemäß Fig. 10 durch einen Leitungsabschnitt 31 (Schornstein) oberhalb des Förderabschnitts 10, 11, entlang dem das Abgas bis zur Position des Schwenkpunkts S verläuft. Von dort führt ein sich vertikal nach oben erstreckender Anschlussabschnitt 32 das Abgas ab, wobei eine analoge Ausgestaltung für den Anschlussabschnitt 32 vorgesehen werden kann, wie es für die Zufuhr in der Schwenklagerung 19 vorgesehen ist. Demgemäß wird hier wiederum mittels einer Drehdurchführung das Abgas an einen (nicht dargestellten) ortsfesten Schornstein übergeben; von diesem wird dann das Abgas an die Umgebung abgegeben.

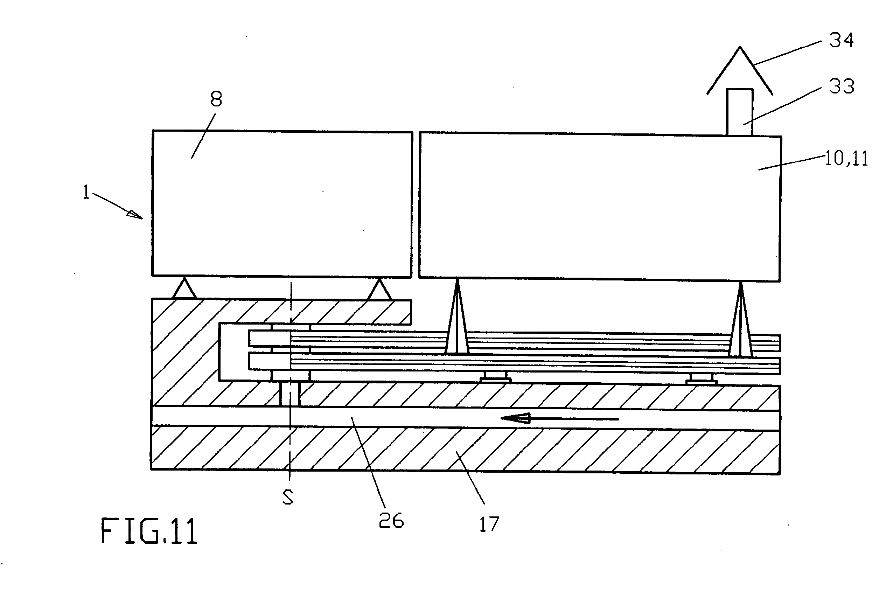

In Fig. 11 ist eine alternative Lösung für die Abfuhr von Abgas illustriert. Während die Medien- und Energiezufuhr wie in Fig. 10 erfolgt, ist hier für die Abfuhr von Abgas ein Schornstein 33 vorgesehen, der ortsfest auf dem Förderabschnitt 10, 11 angeordnet ist. Der Schornstein 33 vollzieht in der Draufsicht also bei der Bewegung des Förderabschnitts 10, 11 eine kreisbogenförmige Bewegung um den Schwenkpunkt S. Oberhalb des Schornsteins 33 ist eine Abzugsrinne 24 angeordnet, die diesem Kreisbogen folgt (s. hierzu Fig. 12). Von der Abzugsrinne 34 aus wird dann das Abgas an die Umgebung abgegeben, was nicht weiter dargestellt ist. Natürlich kann bei Bedarf auch mehr als eine Abzugsrinne 24 vorgesehen werden.

Die Draufsicht auf die Konzeption gemäß Fig. 11 ist in Fig. 12 dargestellt. Hier ist der kreisbogenförmige Verlauf um den Schwenkpunkt S herum sowohl der Schienen 24 und 25 als auch der Abzugsrinne 34 zu erkennen.

Im Allgemeinen ist auch eine Ausgestaltung mit einem nur virtuellen Schwenkpunkt S möglich. Hierbei erfolgt die Bewegung der schwenkbaren Förderabschnitte 10, 11 allein über Rollen auch Schienen nach Art der Darstellung gemäß Fig. 9 bis 12. Die Drehdurchführung im Bereich der Schwenklagerung 19 entfällt hierbei also, d. h. die Auflagen 20 bzw. 21 enden, bevor sie die Schwenkachse S erreichen. Die Zu- und Abfuhr von Medien und Energie erfolgt hier dann in anderer Weise, beispielsweise über Schleppketten.

### Bezugszeichenliste:

- 1: Transportvorrichtung
- 2: Bramme
- 3: Gießmaschine
- 4: Gießmaschine
- 5: Gießmaschine
- 6: Walzwerk
- 7: ortsfester Förderabschnitt
- 8: ortsfester Förderabschnitt
- 9: ortsfester Förderabschnitt
- 10: schwenkbarer Förderabschnitt
- 11: schwenkbarer Förderabschnitt
- 12: ortsfester Förderabschnitt
- 13: ortsfester Förderabschnitt
- 14: schwenkbarer Förderabschnitt
- 14': schwenkbarer Förderabschnitt
- 15: schwenkbarer Förderabschnitt
- 15': schwenkbarer Förderabschnitt
- 16: ortsfester Förderabschnitt
- 17: Fundament
- 18: Ausnehmung
- 19: Schwenklagerung
- 20: Auflage
- 21: Auflage
- 22: Trägerelement
- 23: Trägerelement
- 24: Schiene
- 25: Schiene
- 26: Medienzufuhrleitung
- 27: Leitung
- 28: Leitung
- 29: Leitung
- 30: Leitung
- 31: Leitungsabschnitt
- 32: Anschlussabschnitt
- 33: Schornstein
- 34: Abzugsrinne für Abgas

- F: Förderrichtung
- S: Schwenkpunkt
- S': Schwenkpunkt
- α: Winkel
- β: Winkel

## Patentansprüche

1. Transportvorrichtung (1) für Brammen (2), die zwischen mindestens zwei Gießmaschine (3, 4, 5) und mindestens einem Walzwerk (6) angeordnet ist, wobei die Transportvorrichtung (1) mindestens zwei lineare und ortsfeste Förderabschnitte (7, 8, 9) aufweist, auf denen eine Bramme (2) in eine Förderrichtung (F) gefördert werden kann, und wobei die Transportvorrichtung (1) mindestens zwei lineare Förderabschnitte (10, 11) aufweist, die verschwenkbar angeordnet sind, um eine Bramme (2) unter einem Winkel (α) zur Förderrichtung (F) zu fördern,
**dadurch gekennzeichnet,**
**dass** die mindestens zwei linearen, verschwenkbaren Förderabschnitte (10, 11) unabhängig voneinander verschwenkbar angeordnet sind, wobei die mindestens zwei linearen, verschwenkbaren Förderabschnitte (10, 11) um einen Schwenkpunkt (S) verschwenkbar angeordnet sind, der außerhalb der Längserstreckung der Förderabschnitte (10, 11) angeordnet ist.

2. Transportvorrichtung nach Anspruch 1, **dadurch gekennzeichnet, dass** die linearen und ortsfesten Förderabschnitte (7, 8, 9) parallel zueinander angeordnet sind.

3. Transportvorrichtung nach Anspruch 1 oder 2, **dadurch gekennzeichnet, dass** die linearen Förderabschnitte (7, 8, 9, 10, 11) als Rollgangelemente ausgebildet sind.

4. Transportvorrichtung nach einem der Ansprüche 1 bis 3, **dadurch gekennzeichnet, dass** zumindest ein Teil der linearen Förderabschnitte (7, 8, 9, 10, 11) mit Ofenelementen, insbesondere in Form von Tunnelöfen, versehen sind.

5. Transportvorrichtung nach Anspruch 4, **dadurch gekennzeichnet, dass** zumindest ein Teil der Ofenelemente der linearen Förderabschnitte (7, 8, 9, 10, 11) jeweils unabhängig voneinander beheizbar sind.

6. Transportvorrichtung nach einem der Ansprüche 1 bis 3, **dadurch gekennzeichnet, dass** zumindest ein Teil der linearen Förderabschnitte (7, 8, 9, 10, 11) mit thermischen Isolierelementen versehen sind.

7. Transportvorrichtung nach Anspruch 6, **dadurch gekennzeichnet, dass** die thermischen Isolierelemente im endseitigen Bereich wärmedämmend verschließbar sind.

8. Transportvorrichtung nach einem der Ansprüche 1 bis 7, **dadurch gekennzeichnet, dass** zumindest ein Teil der linearen Förderabschnitte (7, 8, 9, 10, 11) mit Entzunderungselementen versehen sind.

9. Transportvorrichtung nach einem der Ansprüche 1 bis 8, **dadurch gekennzeichnet, dass** weiterhin mindestens ein linearer und ortsfester Förderabschnitt (12, 13) vorhanden ist, der im Anschluss an einen linearen, verschwenkbaren Förderabschnitt (10, 11) angrenzt und unter einem Winkel (α) zur Förderrichtung (F) angeordnet ist.

## Claims

1. Transport device (1) for slabs (2), which device is arranged between at least two casting machines (3, 4, 5) and at least one rolling mill (6), wherein the transport device (1) has at least two linear and stationary conveyor sections (7, 8, 9) on which a slab (2) can be conveyed in a conveying direction (F), and wherein the transport device (1) has at least two linear conveyor sections (10, 11) which are arranged to be pivotable in order to convey a slab (2) at an angle (α) to the conveying direction (F), **characterised in that** the at least two linear, pivotable conveyor sections (10, 11) are arranged to be pivotable independently of one another, wherein the at least two linear, pivotable conveyor sections (10, 11) are arranged to be pivotable about a fulcrum (S) arranged outside the length of the conveyor sections (10, 11).

2. Transport device according to claim 1, **characterised in that** the linear and stationary conveyor sections (7, 8, 9) are arranged parallel to one another.

3. Transport device according to claim 1 or 2, **characterised in that** the linear conveyor sections (7, 8, 9, 10, 11) are constructed as roller path elements.

4. Transport device according to any one of claims 1 to 3, **characterised in that** at least a part of the linear conveyor sections (7, 8, 9, 10, 11) is provided with furnace elements, particularly in the form of tunnel furnaces.

5. Transport device according to claim 4, **characterised in that** at least a part of the furnace elements of the linear conveyor sections (7, 8, 9, 10, 11) is independently heatable.

6. Transport device according to any one of claims 1 to 3, **characterised in that** at least a part of the linear conveyor sections (7, 8, 9, 10, 11) is provided with thermal insulating elements.

7. Transport device according to claim 6, **characterised in that** the thermal insulating elements are closable with respect to heat insulation in the end region.

8. Transport device according to any one of claims 1 to 7, **characterised in that** at least a part of the linear conveyor sections (7, 8, 9, 10, 11) is provided with descaling elements.

9. Transport device according to any one of claims 1 to 8, **characterised in that** in addition at least one linear and stationary conveyor section (12, 13), which follows and adjoins a linear, pivotable conveyor section (10, 11) and is arranged at an angle (α) to the conveying direction (F), is present.

## Revendications

1. Dispositif de transport (1) pour des brames (2), qui est disposé entre au moins deux fondeuses (3, 4, 5) et au moins un laminoir (6), le dispositif de transport (1) présentant au moins deux tronçons de transport linéaires et fixes (7, 8, 9), sur lesquels on peut transporter une brame (2) dans une direction de transport (F), et le dispositif de transport (1) présentant au moins deux tronçons de transport linéaires (10, 11), qui sont disposés en pivotement, pour le transport d'une brame (2) en formant un angle (α) par rapport à la direction de transport (F), **caractérisé en ce que**
lesdits au moins deux tronçons de transport linéaires aptes à pivoter (10, 11) sont disposés de manière à pouvoir pivoter indépendamment l'un de l'autre, lesdits au moins deux tronçons de transport linéaires aptes à pivoter (10, 11) étant disposés de manière à pouvoir pivoter autour d'un point de pivotement (S) qui est disposé à l'extérieur de l'étendue longitudinale des tronçons de transport (10, 11).

2. Dispositif de transport selon la revendication 1, **caractérisé en ce que** les tronçons de transport linéaires et fixes (7, 8, 9) sont disposés parallèlement l'un à l'autre.

3. Dispositif de transport selon la revendication 1 ou 2, **caractérisé en ce que** les tronçons de transport linéaires (7, 8, 9, 10, 11) sont réalisés sous la forme d'éléments du type «voies à rouleaux ».

4. Dispositif de transport selon l'une quelconque des revendications 1 à 3, **caractérisé en ce qu'**au moins une partie des tronçons de transport linéaires (7, 8, 9, 10, 11) sont munis d'éléments faisant office de fours, en particulier sous la forme de fours tunnels.

5. Dispositif de transport selon la revendication 4, **caractérisé en ce qu'**au moins une partie des éléments des tronçons de transport linéaires (7, 8, 9, 10, 11) faisant office de fours peuvent être respectivement chauffés indépendamment les uns des autres.

6. Dispositif de transport selon l'une quelconque des revendications 1 à 3, **caractérisé en ce qu'**au moins une partie des tronçons de transport linéaires (7, 8, 9, 10, 11) sont munis d'éléments procurant une isolation thermique.

7. Dispositif de transport selon la revendication 6, **caractérisé en ce que** les éléments procurant une isolation thermique peuvent être fermés en procurant une isolation thermique dans la zone terminale.

8. Dispositif de transport selon l'une quelconque des revendications 1 à 7, **caractérisé en ce qu'**au moins une partie des tronçons de transport linéaires (7, 8, 9, 10, 11) sont munis d'éléments de décalaminage.

9. Dispositif de transport selon l'une quelconque des revendications 1 à 8, **caractérisé en ce qu'**est présent en outre au moins un tronçon de transport linéaire et fixe (12, 13) qui est directement limitrophe à un tronçon de transport linéaire (10, 11) apte à pivoter et qui est disposé en formant un angle (α) par rapport à la direction de transport (F).
